# EUROPEAN PATENT SPECIFICATION

(11) **EP 1 407 355 B1**
(45) Date of publication and mention of the grant of the patent: **14.06.2006**
(21) Application number: 02741024.0
(22) Date of filing: 20.06.2002
(51) Int. Cl.: G06F 9/46, G06F 12/08

(54) **METHOD AND SYSTEM OF PROCESSING A MEDIA FILE**
VERFAHREN UND GERÄT ZUR VERARBEITUNG EINER MEDIENDATEI
PROCEDE ET SYSTEME DE TRAITEMENT D'UN FICHIER DE MEDIA

(30) Priority: 06.07.2001 EP 01202610
(43) Date of publication of application: 14.04.2004
(73) Proprietor: Koninklijke Philips Electronics N.V., 5621 BA Eindhoven (NL)
(72) Inventor: WEMELSFELDER, A. V., Internat. Octrooibureau B.V., NL-5656 AA Eindhoven (NL)
(74) Representative: van der Veer, Johannis Leendert
(86) International application number: PCT/IB2002/002546
(87) International publication number: WO 2003/005197

(56) References cited:
- EP-A- 0 609 051
- WO-A-01/44958
- WO-A-99/22296
- US-A- 6 006 247
- DUBOIS M ET AL: "SYNCHRONIZATION, COHERENCE, AND EVENT ORDERING IN MULTIPROCESSORS" COMPUTER, IEEE COMPUTER SOCIETY, LONG BEACH., CA, US, US, vol. 21, no. 2, 1 February 1988 (1988-02-01), pages 9-21, XP000111079 ISSN: 0018-9162

## Description

The invention relates to a method of controlling processing of media file data, the method comprising at least one processing step that is executed by a plurality of processors and the at least one processing step comprising processing the media file data.

Furthermore the invention relates to a system for controlling processing of media file data, the system comprising:
a plurality of processor means conceived to execute at least one processing step performed upon the media file data, the processing step comprising reading and/or writing the media file data;
reading from first queue means conceived to comprise a first processing packet wherein the first processing packet comprises media file data.

A general background regarding multitasking multiprocessor systems is to be found in: Dubois, M. et al., "Synchronization, Coherence, and Event Ordering in Multiprocessors", Computer, IEEE Computer Society, Long Beach, Ca, US, vol. 21, no. 2, 1 February 1988, pages 9-21. A specific example of scheduling threads and handling of exceptions in a multiprocessor system is to be found in US patent number 6,006,247.

An embodiment of the method as set forth above is known from WO 99/22296. Here, semaphore-based synchronization is executed among a first station and one or more second stations. For each station a single bivalent semaphore is provided. The first station checks all second station semaphores as having a second state relative to its own semaphore's first state. It then executes a first accessing operation and flips the first state. Otherwise it foregoes the first accessing operation. The second station checks the first station semaphore as having the second state relative to its own semaphore's second state. It then executes a second accessing operation and flips the latter state. Otherwise it foregoes the second accessing operation. However, each station must check the other station's semaphore before deciding upon execution. Therefore, each station must know the next station or next processing step within the network of processing steps, which creates dependencies between the processing steps that lead to a less flexible architecture.

It is an object of the current invention to provide a method that acquires packets in an improved way and allows a more flexible architecture. To achieve this object, the method of processing a media file is set out in appended claim 1.

By claiming a semaphore that guards a processing step before acquiring a first packet from a queue, the first packet and a corresponding update of a pointer indicating a next packet to be acquired can be claimed within one atomic action. This prevents other processors from acquiring the same packets at the same time which can lead to not preserving the sequence in which the packets from the queue are to be processed. Furthermore, by waiting for a predefined state for the first packet, processing the first packet is performed with the correct content of the first packet. By de-coupling each processing step via queues, the processing steps are not aware of each other, which leads to a more flexible architecture, in which the queue and first packet can act as the input or output queue for a processing step.

By acquiring a second packet in addition to acquiring the first packet within the guard of the claimed semaphore, the sequence in which the result from processing the contents of the first packet is stored within a second packet is preserved. Furthermore, a possible previous content of the second packet is not written with new content before it is allowed to re-write the second packet. Since processing data is performed outside the guard of the semaphore, other processors are not stalled until the first processor has finished processing all the data. Within a streaming architecture, the first queue and first packet can be considered the input queue and the input packet for the processing step whereas the second queue and second packet can be considered the output queue and output packet.

An embodiment of the method according to the invention is described in claim 2. By updating shared memory within the guard of the semaphore, the updated content of the shared memory becomes available to all relevant processors simultaneously and is consistent with the content of the acquired input and output packets. Since the update is performed within the guard of the semaphore, reading from and writing to the shared memory by a processing step is performed within an atomic action.

Furthermore, it is an object of the current invention to provide a system that acquires packets in an improved way and allows a more flexible architecture. To achieve this object, the system for processing a media file is set out in appended claim 3.

An embodiment of the system for decoding a media file according to the invention is described in claim 4.

The invention will be described by means of embodiments illustrated by the following drawings:
Figure 1 illustrates a task that reads data from an input queue and writes processed data to an output queue;
Figure 2 illustrates a state per packet;
Figure 3 illustrates the states of the task's semaphore;
Figure 4 illustrates the main steps of the method according to the invention;
Figure 5 illustrates the main parts of a system according to the invention in a schematic way;
Figure 6 illustrates a television set in a schematic way that comprises an embodiment of the system according to the invention;
Figure 7 illustrates, in a schematic way, the most important parts of a set-top box that comprises an embodiment of the system according to the invention;
Figure 8 illustrates the processing tasks of an MPEG video decoder in a schematic way as a graph.

Nowadays, continuous media data processing is performed more and more by programmable components, mixtures of dedicated hardware components and programmable components, rather than dedicated single-function components. Programmable components introduce requirements for modular, flexible, maintainable and powerful architectures that enable this shift from hardware to software driven processing. This is for example the case within the real-time MPEG video processing domain wherein the data is processed by a multi-processor system. The invention relates to such streaming architectures and enables real-time execution of tasks like video encoding and transcoding such as MPEG coded video data, macroblock data and 422 video image data or multiplexing and de-multiplexing. Furthermore the invention can be applied to audio processing, VBI, IP and transport stream processing, video elementary stream or packetized elementary stream (PES) processing. In general, relates the invention to streaming architectures wherein the different processing steps can be performed by a plurality of processors. In the remainder of this description, these processors are often referred to by the term co-processors to indicate that a plurality of processors can perform a task.

Within the invention, each application that can be executed by the co-processor board is subdivided into tasks that have as much as possible in common with other tasks of other applications within the same domain. These tasks behave preferably in a streaming way that allows data to flow in and out. Data that undergoes several sequential processing steps are as much as possible processed by tasks that follow up each other as within pipelined processing. Data that can independently be processed in parallel is preferably processed by parallel tasks or by a single task that can work in parallel on multiple chunks of data, for example on multiple processors.

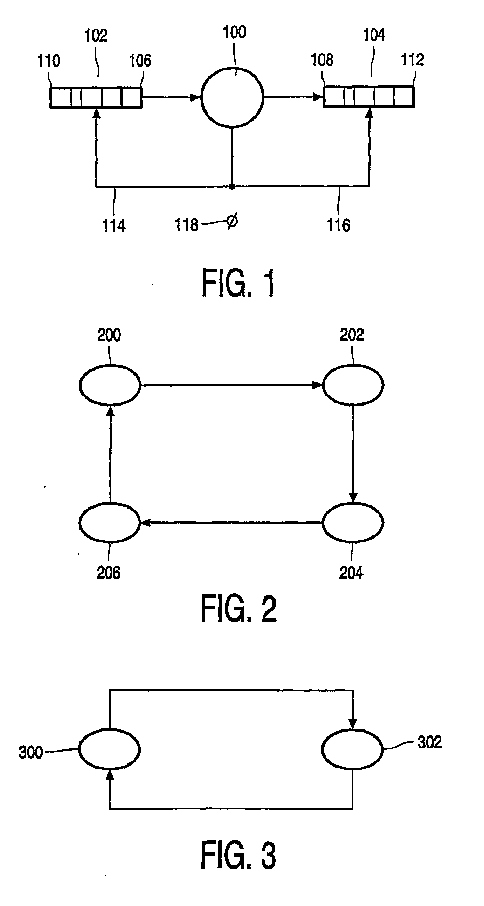

Figure 1 illustrates a task 100 that reads data 106 from an input queue 102 and writes processed data 108 to an output queue 104. The input queue 102 is filled with data 110 from a preceding task and a succeeding task reads data 112 from the output queue 104. The task keeps track of the data it should process by incrementing its read pointer 114 and write pointer 116. Other techniques can be used too that enable the sequential reading from an input queue and sequential writing to an output queue. The invention does not synchronize between reading from the input queue 102 and writing to the output queue 104 by comparing the read pointer 114 and the write pointer 116, but performs the method as described below. Tasks can for example be: forward or inverse Discrete Cosine Transform (DCT) according to the MPEG specification, quantization or de-quantization according to the MPEG specification, storing frame blocks into frame memory, etc.

Multiple processors execute the task and the task has zero or more input queues and zero or more output queues, each containing one or more packets that comprise data. In general, packets are bound to a specific queue and the size and content of the packets can vary. The size of the packets within a specific queue for a predefined task is such that it enables all types of data for the predefined task to be represented accurately. Furthermore, data is passed by value. Data is only passed by reference when there's a special requirement to do so. Additionally, data can be of a specific type and a task can change the data type and generate data of another type. Within most current systems, a pointer refers to the data area. Within some current systems, the actual location of the data area, and therefore the value of the pointer, can change while processing the data. Then the system must take care of consistency between the location and the data. Since multiple processors can execute a task, these processors must be synchronized in order to prevent inconsistent usage of data. This synchronization is achieved by using a semaphore 118 that guards a sub-part of the execution of a task.

Figure 2 illustrates a state per packet. In order to synchronize between reading from the input queue 102 and writing to the output queue 104, a state is kept per packet. This state can change from *writing* 200 *into full* 202 and from *full* 202 into *reading* 204 and from *reading* 204 into *empty* 206. This last state 206 can change into the first state 200 again. The state *writing* indicates that data is being written into the packet and that that the data is not consistent yet to be read, the state *full* indicates that data has been written and is consistent to be read, the state *reading* indicates that data is being read from the packet and the state *empty* indicates that all data has been read from the packet and it is allowed to write new data into the packet again.

Figure 3 illustrates the states of the task's semaphore. The semaphore 118 can be in one of two states. Initially the semaphore is in state *not-claimed* 300. This state can change into state *claimed* 302 that can be changed into *state not-claimed* 300 again. Changing the state of the semaphore is normally done within a read-modify-write action. With the invention, this state change and the corresponding action are preferably performed within one atomic action in order to prevent inconsistent state as a result of an intervening update of an other processor.

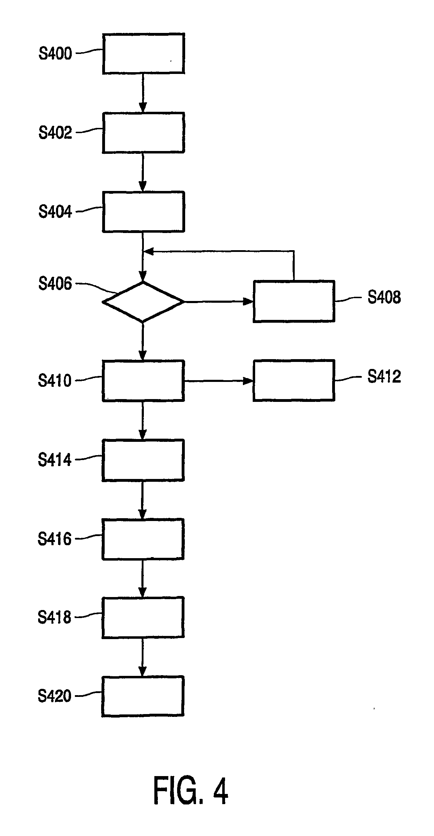

Figure 4 illustrates the main steps of the method according to the invention. These main steps are performed for both the decoding and encoding of a media file. The first step S400 is an initialization step in which the queues are assigned to the appropriate tasks and the tasks are assigned to the appropriate co-processors. Furthermore, tasks are subdivided into different threads and different processors can execute each thread. Within the next step S402, synchronization between the different co-processors that are eligible for executing the task, is achieved by fetching the task's semaphore 118. When the task's semaphore is not available, the specific co-processor can wait for the correct state within an additional step (not shown). The state of the semaphore 118 then changes within step S402 from not-claimed 300 into claimed 302. When the semaphore is claimed, no other processor can claim the semaphore. Only the co-processor that claims the semaphore 118 is allowed to update the task's reading and writing pointer to point them to the next packets from which data is to be read and written. The data comprised within the packet is not guarded by the semaphore. Within step S404, the task accesses the input queue and output queue in order to read the state of the input packet from the input queue as indicated by the read pointer of the task. Furthermore, the task reads the state of the output packet from the output queue as indicated by the write pointer of the task. Both read and write pointers of the task are incremented so that next time, the task reads the states of the next packets to be processed. Within step S406, the states of the packets are inspected. The task can only use *full* 202 packets from the input queue and *empty* packets 206 from the output queue. This way it is prevented that the task reads inconsistent data because the preceding task did not finish writing the data and it is prevented that the task overwrites data at the output queue, because the output packet still comprises data that must be read by the succeeding task. Note that other tasks can still change the state of the packets from *reading* to *empty* and from *writing* to *full,* because the semaphore does only guard the state change of *empty* to *writing* and of *full* to *reading* of these packets. When the state of the input packet is not *full* 202 or the state of the output packet is not *empty* 206, the co-processor that has claimed the semaphore has to wait within step S408 until both states have changed into the correct state: *full* 202 at the input and *empty* 206 at the output. Then, within step S410, the state *full* 202 of the input packet is changed into the state *reading* 204 and the state *empty* 206 of the output packet is changed into the state *writing* 200. Furthermore, when the data comprises shared data that is shared by the co-processors that execute the task, the shared data is transferred into shared memory within optional step S412. Such shared data can effect the execution of the task for all relevant co-processors, it can comprise alternate parameter sets to be handled by the task, or it can comprise specific data that only special tasks can interpret. In order to prevent inconsistent updates and/or usage of the shared data, the data is furthermore copied into the own address space of a single processor. After transferring shared data into shared memory, the semaphore is released within step S414. When step S412 is not performed, step S414 succeeds step 5410. The other co-processors can now start claiming the semaphore as soon as they are ready to process the next packets from the queues. Within step S416, the data is actually processed and the co-processor that processes the data can take all the time it needs for processing. When the co-processor finishes processing the data, the states of the packets are changed within step S418. The state of the input packet is changed from *reading* 204 into *empty* 206 and the state of the output packet is changed from *writing* 200 into *full* 202. Hereto, a semaphore need not be claimed, but the same co-processor can not access the packets immediately again because other tasks running on other co-processors may access the packets.

In general, the described method is independent from the number of processors assigned to a task and thereby enables a transparent speed-up of a complete application by assigning the same task to more processors without the need for redesigning the subdivision into separate tasks of the application. The reassignment can be done during real-time, making the allocation of co-processors to tasks not a design issue per se. Furthermore, the described method preserves the packet order from input to output queues, independent from the difference in processing time between multiple co-processors running the same task on other packets. When a semaphore is introduced for each queue separately, the packet order may not be maintained without taking appropriate measures by for example introducing additional parameters to the packets that can be compared on equality. Hereto, sequence numbers can be used. The usage of a semaphore for each queue separately can enable a more flexible input-to-output packet ratio, for example reading one packet from the input queue and writing two or more packets from the output queue.

The order in the described embodiment of the method of the current invention is not mandatory, a person skilled in the art may change the order of steps or perform steps concurrently using threading models, multi-processor systems or multiple processes without departing from the concept as intended by the current invention.

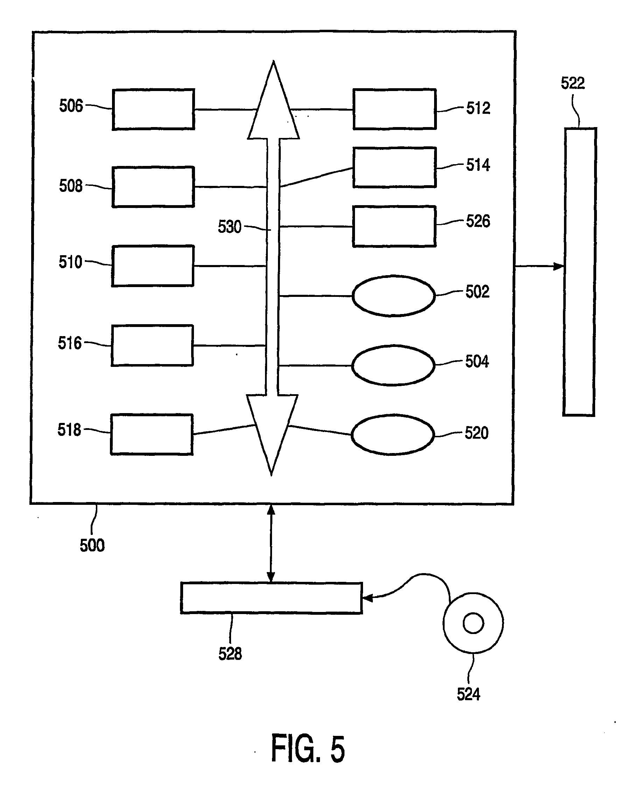

Figure 5 illustrates the main parts of a system according to the invention in a schematic way. The system 500 is able to both encode and decode media streams like MPEG video and audio streams. The system comprises two co-processors 502 and 504 that are assigned to execute a task that comprises multiple threads that can be executed by separate co-processors. Furthermore the system comprises an other co-processor 520 that can execute other tasks that are executable by the system. Memory 506 comprises the input queue that contains the packets with data to be processed by the task. Memory 508 comprises the output queue that contains the packets with data that has been processed by the task. The memory 510 comprises the semaphore as previously described. The task can change the contents of this memory 510 within one atomic action. Furthermore, memory 512 comprises the state of the input packet and memory 514 comprises the state of the output packet. Memory 516 comprises the waiting state of the processors 502 and 504. This memory further comprises software to determine the state of the processors whereas memory 518 comprises software that can change the state of the memories that comprise the states of the input and output packets. The shared parameters between the co-processors are comprised within memory 526 that can be updated by the task. The mentioned memories and co-processors are communicatively connected to each other via a software bus 530. Furthermore, the mentioned task is part of a multi-media application that can play audio, video, show images etc. The system 500 is realized in software intended to be operated as an application run by a computer or any other standard architecture able to operate software. The system 500 can also be realized in hardware and the system can be used to operate a digital or analogue television set 522. The software can also be updated from a storage device 524 that comprises a computer program product arranged to perform the method according to the invention. The storage device is read by a suitable reading device, for example a CD reader 528 that is connected to the system 500.

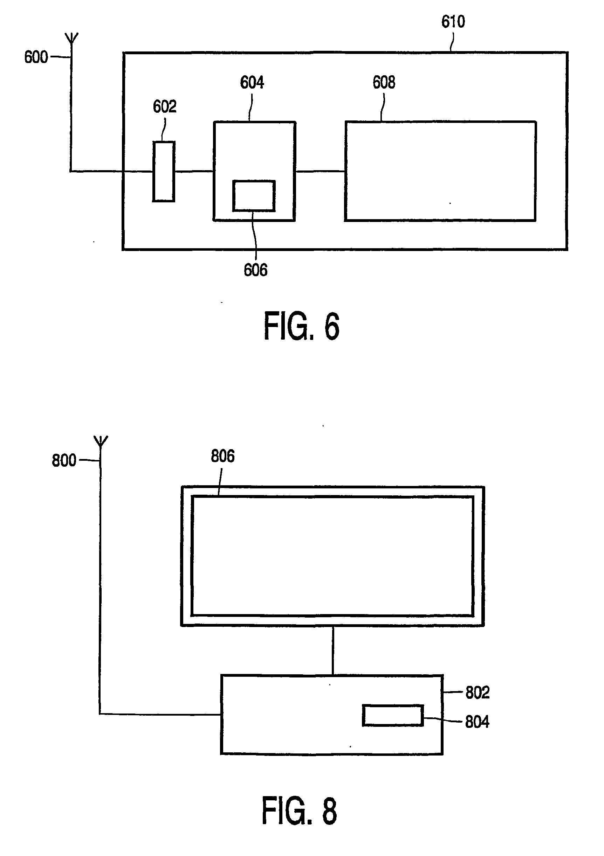

Figure 6 illustrates a television set 610 in a schematic way that comprises an embodiment of the system according to the invention. Here an antenna, 600 receives a television signal. Any device able to receive or reproduce a television signal like, for example, a satellite dish, cable, storage device, internet, or Ethernet can also replace the antenna 600. A receiver, 602 receives the signal. The signal may be for example digital, analogue, RGB or YUV. Besides the receiver 602, the television set contains a programmable component, 604, for example a programmable integrated circuit This programmable component contains a system according to the invention 606. A television screen 608 shows images that are received by the receiver 602 and are processed by the programmable component 604. Within an other example, when a user wants to record the received signal, for example a movie, then the system according to the invention 606 records the received signal on the recording device like a DVD+RW, a compact disk or a harddisk. Within yet an other example, when a user wants to play a recorded movie, then the system according to the invention 606 retrieves the appropriate data from the recording device.

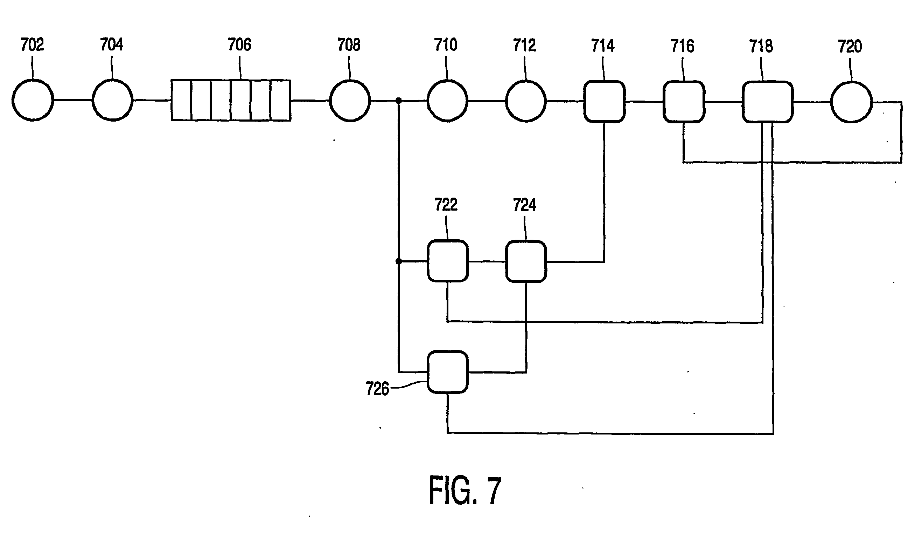

Figure 7 illustrates the processing tasks of an MPEG video decoder in a schematic way as a graph. The video stream is supplied by 702, a stream source. Task 704 performs the header detection and splits the stream into separate slices. This task is an indivisible task that is preferably not subdivided over multiple processors. A single slice is transferred to task 708 via buffer 706. 708 Performs the actual Huffman decoding of the slice. The decoded data now has transformed into a macroblock stream and is then split over multiple tasks. The coefficient part of the macroblock stream is used by task 710 that performs the inverse quantisation and passed on to 712 that performs the inverse DCT. The vector part of the macroblock stream is used by task 722 and 726 that perform motion compensation on forward and backward frames, respectively. Both predictions are then added and averaged by task 724 and form the final prediction. This is then added to the prediction error signal by task 714. The result is the final decoded image, and is stored into a frame memory by task 716. Task 716 gets the frame buffer references from the display task 720 that stores the free frames. Once all macroblocks of a picture have been written to the frame, the frame reference is passed to task 718, the frame manager. This frame manager decides which frames are to be used as anchor frames and which frames are to be displayed. The anchor frames are used by task 722 and 726 for the motion prediction of the next frames. The frames to be displayed are passed to task 720 that further displays the new frames and returns the old frames to the free list. Within this architecture tasks all applicable tasks can be processed by multiple co-processors wherein synchronization is performed according to the method according to the invention as previously described.

Figure 8 illustrates, in a schematic way, the most important parts of a set-top box that comprises an embodiment of the system according to the invention. Here, an antenna 800 receives a television signal. The antenna may also be for example a satellite dish, cable, storage device, internet, Ethernet or any other device able to receive a television signal. A set-top box 802, receives the signal. The signal may be for example digital, analogue, RGB or YUV. Besides the usual parts that are contained in a set-top box, but are not shown here, the set-top box contains a system according to the invention 804. When a user wants to record the received signal, for example a movie, the system according to the invention 804 records the received signal on the recording device like a DVD+RW, a compact disk or a harddisk. When a user wants to play a recorded movie, the system according to the invention 804 retrieves the appropriate data from the recording device. The television set 806 can show the output signal generated from a received signal by the set-top box 802.

## Claims

1. A method of controlling processing of streaming data (106, 108), the method comprising at least one processing step (100) that is executed by a plurality of processors and the at least one processing step comprising reading data packets from a first queue (102) and writing data packets to a second queue, the queues comprising streaming data
wherein the at least one processing step further comprises:
a first step (S402) of claiming by one of the plurality of processors a semaphore (118) that guards access to the first queue and to the second queue by the at least one processing step;
a second step (S404) of acquiring a first data packet from the first queue (102) and acquiring a second data packet from the second queue;
a third step (S408) of waiting until the first data packet has a first predefined state of a plurality of predefined states (200, 202, 204, 206), the first predefined state indicating that the data packet is ready for read access by the at least one processing step and waiting until the second data packet has a third predefined state of the plurality of predefined states, the third predefined state indicating that the data packet is ready for write access by the at least one processing step;
a fourth step (410) of changing the first predefined input state of the first data packet into a second predefined state of the plurality of predefined states, the second predefined state indicating that the data packet is being accessed by the at least one processing step and changing the third predefined state of the second data packet into a fourth predefined state of the plurality of predefined states, the fourth predefined state indicating that the data packet is being written by the at least one processing step;
a fifth step (414) of releasing the semaphore by the one of the plurality of processors;
a sixth step of reading from the first data packet and writing to the second data packet;
a seventh step of changing the second predefined state of the first data packet into the third predefined state of the plurality of predefined states, and changing the fourth predefmed state of the second data packet into the first predefined state of the plurality of predefined states.

2. A method according to claim 1, wherein the third step further comprises a substep of updating a content of a shared memory, the shared memory being shared by the plurality of processors.

3. A system for controlling processing of streaming data, the system (500) comprising:
a plurality of processor means (502, 504) conceived to execute at least one processing step (100) performed upon the streaming data, the processing step comprising access to a first queue comprising streaming data;
first queue means (506) conceived to comprise a first data packet comprising streaming data;
wherein the system further comprises:
second queue means (508) conceived to comprise a second data packet comprising streaming data;
semaphore means (510) conceived to guard access to the first queue and to the second queue by the plurality of processors;
state means (508, 514) conceived to comprise a first predefined state of a plurality of predefined states (200, 202, 204, 206), the first predefined state indicating that the data packet is ready for read access by the at least one processing step and to comprise a third predefined state of the plurality of predefmed states, the third predefined state indicating that the data packet is ready for write access by the at least one processing step;
waiting means (516) conceived to wait for a first predefined state for the first data packet and a third predefined state for the second data packet; and
changing means (518) conceived to change the first predefined state of the first data packet into a second predefined state of the plurality of predefined states, the second predefined state indicating that the data packet is being read by the at least one processing step, and to change the third predefmed state of the second data packet into a fourth predefined state of the plurality of predefined states, the fourth predefined state indicating that the data packet is being written by the at least one processing step.

4. A system according to claim 3, wherein the system (500) further comprises memory means (526) conceived to comprise shared content for the plurality of processors.

5. A computer program product being adapted carry out all the steps of the method according to any of the claims 1 to 2.

6. A storage device (524) comprising a computer program product according to claim 5.

7. A television set (600) comprising a system according to any of the claims 3 to 4.

8. A set-top box (700) comprising a system according to any of the claims 3 to 4.

## Patentansprüche

1. Verfahren zum Steuern der Verarbeitung von Streamingdaten (106, 108), wobei das Verfahren mindestens einen Verarbeitungsschritt (100) umfasst, der durch mehrere Prozessoren ausgeführt wird und wobei der mindestens eine Verarbeitungsschritt das Lesen von Datenpaketen von einer ersten Warteschlange (102) und das Schreiben von Datenpaketen in eine zweite Warteschlange umfasst, wobei die Warteschlangen Streamingdaten umfassen, wobei der mindestens eine Verarbeitungsschritt ferner Folgendes umfasst:
einen ersten Schritt (S402) des Beanspruchens eines Semaphors (118), der den Zugriff auf die erste Warteschlange und auf die zweite Warteschlange durch den mindestens einen Verarbeitungsschritt schützt, durch einen der mehreren Prozessoren;
einen zweiten Schritt (S404) des Erfassens eines ersten Datenpakets von der ersten Warteschlange (102) und Erfassen eines zweiten Datenpakets von der zweiten Warteschlange;
einen dritten Schritt (S408) des Wartens, bis das erste Datenpaket einen ersten vordefinierten Zustand von mehreren vordefinierten Zuständen (200, 202, 204, 206) hat, wobei der erste vordefinierte Zustand anzeigt, dass das Datenpaket bereit für Lesezugriff durch den mindestens einen Verarbeitungsschritt ist, und Warten bis das zweite Datenpaket einen dritten vordefinierten Zustand der mehreren vordefinierten Zustände hat, wobei der dritte vordefinierte Zustand anzeigt, dass das Datenpaket bereit für Schreibzugriff durch den mindestens einen Verarbeitungsschritt ist;
einen vierten Schritt (410) des Änderns des ersten vordefinierten Eingangszustands des ersten Datenpakets in einen zweiten vordefinierten Zustand der mehreren vordefinierten Zustände, wobei der zweite vordefinierte Zustand anzeigt, dass durch den mindestens einen Verarbeitungsschritt auf das Datenpaket zugegriffen wird, und Ändern des dritten vordefinierten Zustands des zweiten Datenpakets in einen vierten vordefinierten Zustand der mehreren vordefinierten Zustände, wobei der vierte vordefinierte Zustand anzeigt, dass das Datenpaket durch den mindestens einen Verarbeitungsschritt geschrieben wird;
einen fünften Schritt (414) des Freigebens des Semaphors durch den einen der mehreren Prozessoren;
einen sechsten Schritt des Lesens von dem ersten Datenpaket und des Schreibens auf das zweite Datenpaket;
einen siebten Schritt des Änderns des zweiten vordefinierten Zustands des ersten Datenpakets in den dritten vordefinierten Zustand der mehreren vordefinierten Zustände, und Ändern des vierten vordefinierten Zustands des zweiten Datenpakets in den ersten vordefinierten Zustand der mehreren vordefinierten Zustände.

2. Verfahren nach Anspruch 1, wobei der dritte Schritt ferner einen Teilschritt des Aktualisierens eines Inhalts eines gemeinsamen Speichers umfasst, wobei der gemeinsame Speicher durch die mehreren Prozessoren geteilt wird.

3. Gerät zum Steuern der Verarbeitung von Streamingdaten, wobei das Gerät (500) Folgendes umfasst:
mehrere Prozessormittel (502, 504), die konzipiert sind, um mindestens einen Verarbeitungsschritt (100) auszuführen, der auf den Streamingdaten durchgeführt wird, wobei der Verarbeitungsschritt den Zugriff auf eine erste Warteschlange umfasst, die Streamingdaten umfasst;
erste Warteschlangenmittel (506), die konzipiert sind, um ein erstes Datenpaket zu umfassen, das Streamingdaten umfasst;
wobei das Gerät ferner Folgendes umfasst:
zweite Warteschlangenmittel (508), die konzipiert sind, um ein zweites Datenpaket zu umfassen, das Streamingdaten umfasst;
Semaphormittel (510), die konzipiert sind, um den Zugriff durch die mehreren Prozessoren auf die erste Warteschlange und auf die zweite Warteschlange zu schützen;
Zustandsmittel (508, 514), die konzipiert sind, um einen ersten vordefinierten Zustand von mehreren vordefinierten Zuständen (200, 202, 204, 206) zu umfassen, wobei der erste vordefinierte Zustand anzeigt, dass das Datenpaket bereit für den Lesezugriff durch den mindestens einen Verarbeitungsschritt ist und um einen dritten vordefinierten Zustand von den mehreren vordefinierten Zuständen zu umfassen, wobei der dritte vordefinierte Zustand anzeigt, dass das Datenpaket bereit für Schreibzugriff durch den mindestens einen Verarbeitungsschritt ist;
Wartemittel (516), die konzipiert sind, um auf einen ersten vordefinierten Zustand für das erste Datenpaket und einen dritten vordefinierten Zustand für das zweite Datenpaket zu warten; und
Änderungsmittel (518), die konzipiert sind, um den ersten vordefinierten Zustand des ersten Datenpakets in einen zweiten vordefinierten Zustand der mehreren vordefinierten Zustände zu ändern, wobei der zweite vordefinierte Zustand anzeigt, dass das Datenpaket durch den mindestens einen Verarbeitungsschritt gelesen wird, und um den dritten vordefinierten Zustand des zweiten Datenpakets in einen vierten vordefinierten Zustand der mehreren vordefinierten Zustände zu ändern, wobei der vierte vordefinierte Zustand anzeigt, dass das Datenpaket durch den mindestens einen Verarbeitungsschritt geschrieben wird.

4. Gerät nach Anspruch 3, wobei das Gerät (500) ferner Speichermittel (526) umfasst, die konzipiert sind, um gemeinsamen Inhalt für die mehreren Prozessoren zu umfassen.

5. Computerprogrammprodukt, das angepasst ist, um alle Schritte des Verfahrens nach einem der Ansprüche 1 bis 2 auszuführen.

6. Speichervorrichtung (524), die ein Computerprogrammprodukt nach Anspruch 5 umfasst.

7. Fernsehapparat (600), der ein Gerät nach einem der Ansprüche 3 bis 4 umfasst.

8. Set-Top-Box (700), die ein Gerät nach einem der Ansprüche 3 bis 4 umfasst.

## Revendications

1. Procédé pour contrôler le traitement de données de transmission en continu (106, 108), le procédé comprenant au moins une étape de traitement (100) qui est exécutée par une pluralité de processeurs et la au moins une étape de traitement comprenant la lecture de paquets de données à partir d'une première file d'attente. (102) et l'écriture de paquets de données dans une seconde file d'attente, les files d'attente comprenant des données de transmission en continu, dans lequel la au moins une étape de traitement comprend en outre :
une première étape (S402) de demande par l'un des processeurs de la pluralité d'un sémaphore (118) qui protège l'accès à la première file d'attente et à la seconde file d'attente par la au moins une étape de traitement;
une deuxième étape (S404) d'acquisition d'un premier paquet de données à partir de la première file d'attente (102) et d'acquisition d'un second paquet de données à partir de la seconde file d'attente;
une troisième étape (S408) d'attente jusqu'à ce que le premier paquet de données présente un premier état prédéfini d'une pluralité d'états prédéfinis (200, 202, 204, 206), le premier état prédéfini indiquant que le paquet de données est prêt pour un accès de lecture par la au moins une étape de traitement et d'attente jusqu'à ce que le second paquet de données présente un troisième état prédéterminé de la pluralité d'états prédéfinis, le troisième état prédéfini indiquant que le paquet de données est prêt pour un accès d'écriture par la au moins une étape de traitement;
une quatrième étape (410) de changement du premier état d'entrée prédéfini du premier paquet de données en un deuxième état prédéfini de la pluralité d'états prédéfinis, le deuxième état prédéfini indiquant que le paquet de données est l'objet d'un accès par la au moins une étape de traitement et de changement du troisième état prédéfini du second paquet de données en un quatrième état prédéfini de la pluralité d'états prédéfinis, le quatrième état prédéfini indiquant que le paquet de données est l'objet d'une écriture par la au moins une étape de traitement;
une cinquième étape (414) de libération du sémaphore par ledit un des processeurs de la pluralité;
une sixième étape de lecture à partir du premier paquet de données et d'écriture dans le second paquet de données;
une septième étape de changement du deuxième état prédéfini du premier paquet de données en troisième état prédéfini de la pluralité d'états prédéfinis, et de changement du quatrième état prédéfini du second paquet de données en premier état prédéfini de la pluralité d'états prédéfinis.

2. Procédé suivant la revendication 1, dans lequel la troisième étape comprend en outre une sous-étape de mise à jour d'un contenu d'une mémoire partagée, la mémoire partagée étant partagée par la pluralité de processeurs.

3. Système pour contrôler le traitement de données de transmission en continu, le système (500) comprenant :
une pluralité de processeurs (502, 504) conçus pour exécuter au moins une étape de traitement (100) effectuée sur les données de transmission en continu, l'étape de traitement comprenant un accès à une première file d'attente comprenant des données de transmission en continu;
une première file d'attente (506) conçue pour comprendre un premier paquet de données comprenant des données de transmission en continu;
le système comprenant en outre :
une seconde file d'attente (508) conçue pour comprendre un second paquet de données comprenant des données de transmission en continu;
un sémaphore (510) conçu pour protéger l'accès à la première file d'attente et à la seconde file d'attente par la pluralité de processeurs;
un moyen à états (508, 514) conçu pour comprendre un premier état prédéfini d'une pluralité d'états prédéfinis (200, 202, 204, 206), le premier état prédéfini indiquant que le paquet de données est prêt pour un accès de lecture par la au moins une étape de traitement et pour comprendre un troisième état prédéfini de la pluralité d'états prédéfinis, le troisième état prédéfini indiquant que le paquet de données est prêt pour un accès d'écriture par la au moins une étape de traitement;
un moyen d'attente (516) conçu pour attendre un premier état prédéfini pour le premier paquet de données et un troisième état prédéfini pour le second paquet de données; et
un moyen de changement (518) conçu pour changer le premier état prédéfini du premier paquet de données en un second état prédéfini de la pluralité d'états prédéfinis, le second état prédéfini indiquant que le paquet de données est en cours de lecture par la au moins une étape de traitement, et pour changer le troisième état prédéfini du second paquet de données en un quatrième état prédéfini de la pluralité d'états prédéfinis, le quatrième état prédéfini indiquant que le paquet de données est en cours d'écriture par la au moins une étape de traitement.

4. Système suivant la revendication 3, dans lequel le système (500) comprend en outre une mémoire (526) conçue pour comprendre un contenu partagé pour la pluralité de processeurs.

5. Progiciel d'ordinateur à même d'exécuter toutes les étapes du procédé suivant l'une quelconque des revendications 1, 2.

6. Dispositif de stockage (524) comprenant un progiciel d'ordinateur suivant la revendication 5.

7. Téléviseur (600) comprenant un système suivant l'une quelconque des revendications 3, 4.

8. Boîtier décodeur (700) comprenant un système suivant l'une quelconque des revendications 3, 4.
